# EUROPEAN PATENT APPLICATION

(11) **EP 1 531 099 A1**
(43) Date of publication of application: **18.05.2005**
(21) Application number: 04013007.2
(22) Date of filing: 02.06.2004
(51) Int. Cl.: B60R 22/44, B60R 22/46

(54) **Seat belt retractor**

(30) Priority: 11.11.2003 JP 2003380809
(71) Applicant: TAKATA CORPORATION, Minato-ku, Tokyo 106-8510 (JP)
(72) Inventor: Tanaka, Koji Takata Corporation, Minato-ku Tokyo 106-8510 (JP); Inuzuka, Koji Takata Corporation, Minato-ku Tokyo 106-8510 (JP)
(74) Representative: Banzer, Hans-Jörg, Dipl.-Ing.

(57) **Abstract**

The object is to provide a seat belt retractor for preventing noise when in the clutch-disengaged mode. In order to solve this object, in the seat belt retractor (1) of the invention, upon reverse rotation of a motor (6) for rotating a spool (4) an upper connecting gear (27) is rotated in the clockwise direction, and both a clutch gear (31) and a rotating shaft (32) thereof are moved along a guide opening (11g). The clutch gear (31) separates from an outer teeth (17b) of a carrier gear (17), following which the clutch gear (31) meshes with the inner teeth of a clutch gear stopping/holding portion (11k). Upon the rotating shaft (32) coming in contact with the right end of the guide opening (11g), the movement of the clutch gear (31) and the rotating shaft (32) in the right direction is stopped, as well as stopping rotation of the clutch gear (31). Thus, switching to the clutch-disengaged mode is completed. In this case, rotation of the clutch gear (31) is stopped, thereby preventing noise due to rotation of other gears of the clutch mechanism and a power transmission mechanism (8).

## Description

The present invention relates to a seat belt retractor, which is included in a vehicle such as an automobile or the like, for retracting a seat belt for restraining and protecting a passenger by actions of a motor, particularly to a seat belt retractor including a clutch mechanism for controlling engaging of a power transmission path. Furthermore, the present invention relates to a seat belt apparatus or a seat belt device comprising such a seat belt retractor.

Conventionally, a seat belt device included in a vehicle such as an automobile or the like is known wherein in a case of emergency such as a case wherein great deceleration acts upon the vehicle in a collision or the like, a seat belt restrains a passenger so as to prevent the passenger from being thrown out of the seat, thereby protecting the passenger.
Such a seat belt device includes a seat belt retractor for retracting the seat belt. The seat belt retractor includes forcing means such as a spiral spring or the like for forcing a spool to rotate in the belt-retracting direction at all times for reeling the seat belt thereon. That is to say, the seat belt is reeled onto the spool due to the force of the forcing means when the passenger does not wear the seat belt. On the other hand, the seat belt is extracted against the force due to the forcing means when the passenger wears the seat belt. The seat belt retractor has lock means for prohibiting rotation of the spool in the belt-extracting direction in a case of emergency such as the aforementioned examples, thereby prohibiting extraction of the seat belt in a case of emergency. Thus, with the seat belt, the passenger is restrained and protected in a sure manner in a case of emergency.

With such a conventional seat belt device, a generally constant belt tension is applied to the seat belt due to the forcing means at the time of wearing the seat belt. Accordingly, the seat belt retractor operates generally in a single mode regardless of situations of the vehicle including the seat belt device and the surroundings thereof. In this case, while the conventional seat belt device restrains and protects the passenger in a sure manner in a case of emergency as described above, the seat belt is not controlled so as to provide comfortable wearing for the passenger in situations other than such a case of emergency. Furthermore, there is increased demand for a seat belt wherein the passenger is more stably restrained so as to be protected in a surer manner in a case of emergency.

Accordingly, a passenger restraining/protecting system has been disclosed in Japanese Unexamined Patent Application Publication No. 2002-104135 and so forth, wherein a motor is included for controlling rotation of the spool of the seat belt retractor corresponding to situations of the vehicle including the seat belt device and the surroundings thereof so as to adjust belt tension, thereby more efficiently restraining and protecting the passenger, as well as providing more comfortable wearing for the passenger.

The seat belt retractor disclosed in Japanese Unexamined Patent Application Publication No. 2002-104135 has a configuration as follows. That is to say, at the time that the motor is not driven, the power transmission path for transmitting the driving force of the motor to the spool is disengaged so that the driving force is not transmitted to the spool, and thus, both the motor and the spool can be freely rotated. Upon the motor being driven in the belt-retracting direction (which will be referred to "positive rotational direction" hereafter) for forcing the retracting action of the seat belt, the power transmission path is engaged due to the positive rotation of the motor, thereby enabling transmission of the driving force of the motor to the spool. Thus, the seat belt retractor is controlled so that the spool is rotated in the belt-retracting direction so as to retract the seat belt by the driving force of the motor, thereby increasing the belt tension. Furthermore, in this case, upon the motor is rotated in the reverse direction for releasing the forced retracting action of the seat belt, the power transmission path is disengaged. As a result, both the motor and the spool can be freely rotated, i.e., the spool is not affected by the driving force of the motor.

As described above, the seat belt retractor disclosed in Japanese Unexamined Patent Application Publication No. 2002-104135 has a configuration wherein at the time of positive rotation of the motor, the clutch for controlling engaging of the power transmission path is engaged so as to effect engaging of the power transmission path, and on the other hand, at the time of the reverse rotation of the motor, the clutch is disengaged so as to prohibit engaging of the power transmission path.

The seat belt retractor disclosed in Japanese Unexamined Patent Application Publication No. 2002-104135 needs to operate as follows; i.e., at the time that the power transmission path is disengaged, driving of the motor is stopped after completion of disengaging of the clutch for the power transmission path by the reverse rotation of motor. Accordingly, in general, with the aforementioned seat belt retractor, the period of time for reverse rotation is determined based upon the period of time from the start of the reverse rotation of the motor to completion of disengaging of the clutch. In this case, the period of time required for completion of disengaging of the clutch differs according to operating situations of the retractor, and accordingly, with the seat belt retractor, the period of time for the reverse rotation is determined to be the maximum period of time required for completion of disengaging of the clutch in all the situations, and thus, in any situation, the motor is controlled so as to stop driving thereof after completion of disengaging of the clutch in a sure manner.

However, with the seat belt retractor which operates with a fixed period of time for the reverse rotation of the motor for disengaging of the clutch, the reverse rotation of the motor is performed in a relatively long time of period in most ordinary situations, leading to generation of mechanical noise. While the aforementioned mechanical noise caused no particular problem for an arrangement employing the seat belt retractor disclosed in Japanese Unexamined Patent Application Publication No. 2002-104135, the mechanical noise is preferably suppressed as much as possible.

The present invention has been made in order to solve the above-described problems, and accordingly, it is an object thereof to provide a seat belt retractor having a configuration wherein the mechanical noise is suppressed at the time of disengaging of the clutch.

According to the present invention, this object is achieved by a seat belt retractor as defined by independent Claim 1. The dependent claims define preferred and advantageous embodiments of the invention.

In order to solve the aforementioned problems, the seat belt retractor according to the present invention comprises at least: a spool for reeling a seat belt; a motor for generating rotational torque for rotating the spool; and a clutch mechanism wherein a power transmission path for transmitting rotational torque of the motor to the spool is engaged when in the engaged mode, and on the other hand, the power transmission path is disengaged when in the disengaged mode, wherein the seat belt retractor includes at least noise preventing means for preventing noise when the clutch mechanism enters the disengaged mode.

Furthermore, the clutch mechanism may be able to move between the clutch-engaged position for engaging the power transmission path and the clutch-disengaged position for disengaging the power transmission path, and may include a clutch gear for always meshing with a gear connected to the motor, and the noise preventing means preferably prevent noise when the clutch gear is positioned at the clutch-disengaged position.

Furthermore, the clutch gear preferably serves as clutch gear stopping/holding means for stopping rotation of the clutch gear when the clutch gear is positioned at the clutch-disengaged position.
Furthermore, the clutch gear stopping/holding means may be formed of teeth for meshing with the clutch gear.

The present invention also provides a seat belt apparatus comprising a seat belt and the seat belt retractor of the present invention.

With the seat belt retractor having such a configuration according to the present invention when the clutch mechanism is disengaged, generation of noise from the clutch mechanism and the power transmission mechanism is prevented by the noise preventing means.
In particular, noise generation from the clutch mechanism and the power transmission mechanism is prevented by the noise preventing means in a sure manner.

Furthermore, when the clutch gear is positioned at the clutch-disengaged position, rotation of the clutch gear is stopped by the clutch gear stopping/holding means, thereby preventing noise due to rotation of the clutch gear. In particular, the clutch gear stopping/holding means may be formed of teeth for meshing with the clutch gear, and accordingly, rotation of the clutch gear is stopped in a sure manner at the time of disengaging the clutch mechanism, thereby effectively preventing noise generation with a simple configuration.

Description will be made below regarding an embodiment according to the present invention with reference to the drawings.
Fig. 1 is a disassembled perspective view which shows a seat belt retractor according to an embodiment of the present invention.
Fig. 2 shows the seat belt retractor shown in Fig. 1 without a retainer cover, wherein Fig. 2(a) is a perspective view thereof, and Fig. 2(b) is a left side view thereof.
Fig. 3 shows a sun gear member employed in the seat belt retractor shown in Fig. 1, wherein Fig. 3(a) is a perspective view thereof, and Fig. 3(b) is a perspective view as viewed from the IIIB direction in Fig. 3(a).
Fig. 4 is a left side view which shows the seat belt retractor shown in Fig. 1 with a part of the components thereof removed, in the power transmission disengaged mode.
Fig. 5 is a left side view which shows the seat belt retractor shown in Fig. 1 with a part of the components thereof removed, in the low reduction ratio power transmission mode.
Fig. 6 is a left side view which shows the seat belt retractor shown in Fig. 1 with a part of the components thereof removed, in the high reduction ratio power transmission mode.

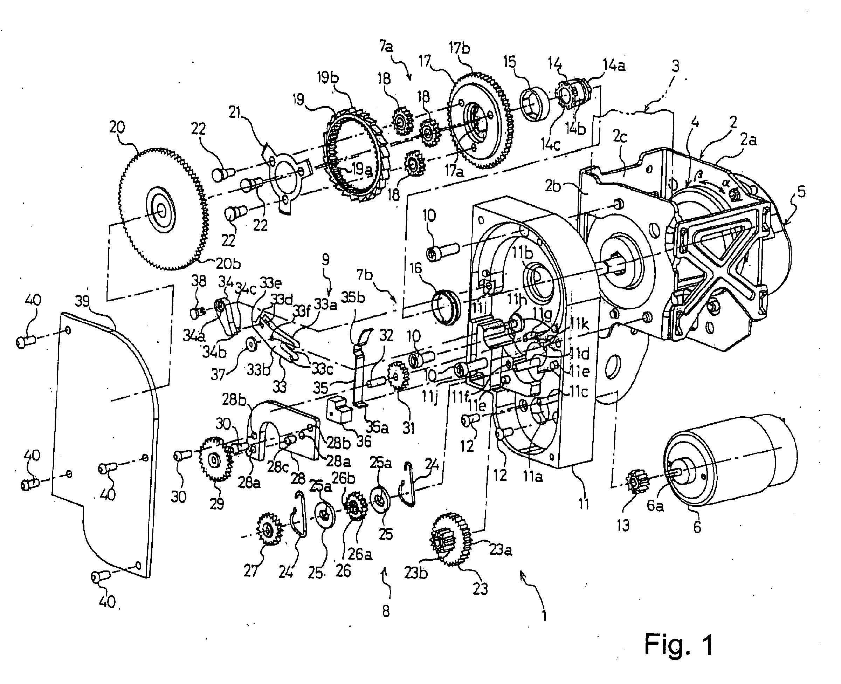

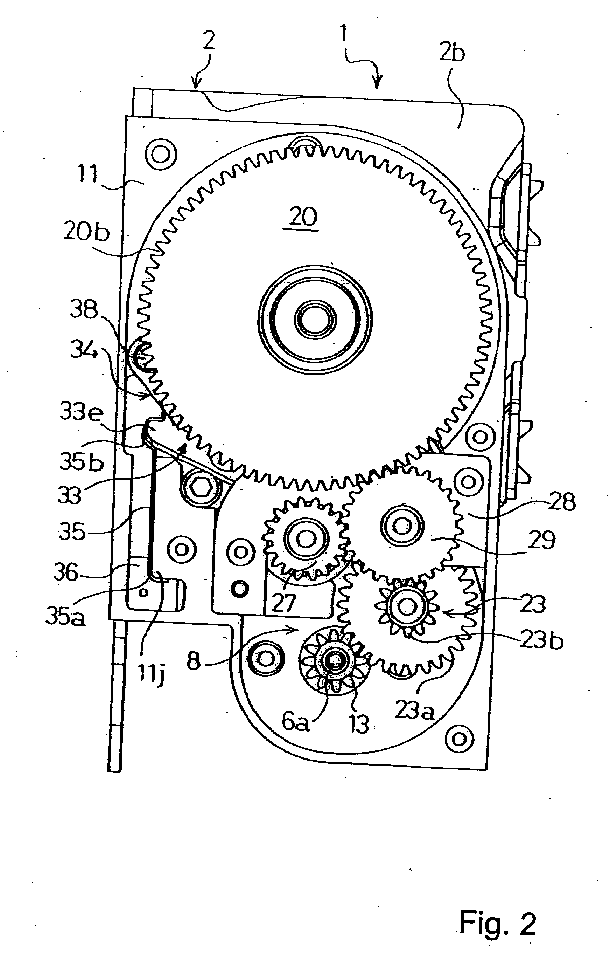

Fig. 1 is a disassembled perspective diagram which shows a seat belt retractor according to an embodiment of the present invention. Fig. 2 is a left side view which shows the seat belt retractor without a retainer cover shown in Fig. 1. Note that "left" and "right" will represent the left and the right in the drawings, respectively, unless noted otherwise. Furthermore, "clockwise" and "counterclockwise" represent the clockwise direction and the counterclockwise direction in the drawings, respectively.

As shown in Fig. 1, a seat belt retractor 1 according to the present embodiment primarily comprises a frame 2, a seat belt 3 for restraining the passenger when necessary, a spool 4 for reeling the seat belt 3 thereon, lock means 5 disposed on one side of the frame 2 for prohibiting rotation of the spool 4 in the belt-extracting direction α which operates at the time of great deceleration equal to or more than a predetermined deceleration in a collision or the like, a motor 6 for generating rotational torque applied to the spool 4, a high reduction ratio reducing mechanism 7a for reducing rotation of the motor 6 with a relatively high reduction ratio so as to transmit the reduced rotation to the spool 4, and a low reduction ratio reducing mechanism 7b for reducing rotation of the motor 6 with a relatively low reduction ratio so as to transmit the reduced rotation to the spool 4, which form a first power transmission path and a second power transmission path, and a power transmission gear mechanism 8 for transmitting the rotational torque of the motor 6 to the spool 4 through a power transmission path selected from one of the first power transmission path and the second power transmission path, and a power transmission mode switching mechanism 9 for performing switching between the first power transmission path and the second power transmission path, through which the power transmission gear mechanism 8 transmits the rotational torque of the motor 6 to the spool 4.

The frame 2 is formed of a pair of side walls 2a and 2b parallel one to another, and a back plate 2c for connecting the side walls 2a and 2b. Furthermore, the spool 4 is rotatably disposed between both the side walls 2a and 2b within the flame 2 for reeling the seat belt 3 thereon. A conventionally-known and widely-used spool may be employed as the spool 4 of the seat belt retractor 1.

Lock means 5 are provided to one of the side walls 2a. Note that a conventionally-known and widely-used lock means may be employed as the lock means 5. In the event that a vehicle sensor (deceleration sensor) detects great deceleration applied to the vehicle, which is equal to or greater than a predetermined amount of deceleration, or in the event that a webbing sensor (belt retracting speed sensor) detects retraction of the seat belt 3 at a predetermined speed or more, the lock means 5 act so as to prohibit rotation of the spool 4 in the belt-extracting direction α.

Furthermore, an unshown conventionally-known and widely-used force-limiting mechanism (energy absorbing mechanism, which will be referred to as "EA mechanism" hereafter) is provided between the spool 4 and the lock means 5 for limiting the load of the seat belt 3 in the event that extraction of the seat belt 3 is prohibited by actions of the lock means 5. The EA mechanism may be formed of conventionally-known torsion bars, and may have a configuration wherein prohibition of extraction of the seat belt 3 by actions of the lock means 5 causes deformation of the torsion bars so as to limit the load of the seat belt 3, thereby absorbing impact energy.

As shown in Figs. 1 and 2, the motor 6 is secured on a face of the retainer 11 with a pair of screws 12. Note that the other side wall 2b of the frame 2 is secured on the aforementioned face of the retainer 11 with three screws 10. A motor rotating shaft 6a of the motor 6 passes through a through hole 11a. Furthermore, a motor gear 13 having outer teeth is integrally and rotatably secured to the motor rotating shaft 6a protruding from the face of the retainer 11 which is opposite to the face for mounting the frame 2.

As shown in Fig. 1, a connector 14 is provided between: the combination of the spool 4 and the EA mechanism (e.g., torsion bars); and the combination of the reducing mechanisms 7a and 7b, for engaging the aforementioned combinations so as to enable rotation in the rotational direction. The connector 14 comprises a first rotary engaging portion 14a for engaging with the combination of the spool 4 and the EA mechanism so as to enable rotation in the rotational direction, a second rotary engaging portion 14b for engaging with a bearing 15 for the connector 14 so as to enable rotation in the rotational direction, and a third rotary engaging portion 14c for engaging with the combination of the reducing mechanism 7a and 7b each of which are formed in the shape of a spline, so as to enable rotation in the rotational direction.

The first rotary engaging portion 14a is formed of a tube in a shape of a polygon, which is not clearly shown in Fig. 1. The first rotary engaging portion 14a is integrally and rotatably engaged with the spool 4 through the outer face thereof, as well as being integrally and rotatably engaged to the EA mechanism (e.g., torsion bars) through the inner face thereof. Note that the engaging mechanisms for integrally and rotatably engaging each of the spool 4 and the EA mechanism; and the connector 14, are well known, and accordingly, detailed description thereof will be omitted.

The second rotary engaging portion 14b is formed with the outer face having a cross-sectional shape of a polygon, and also the connector bearing 15 is formed with the inner face having the same cross-sectional shape. The connector bearing 15 is fit to the second rotary engaging portion 14b so as not to rotate relatively to each other. The connector bearing 15 is relatively rotatably supported by a retainer bearing 16. Furthermore, the retainer bearing 16b is mounted to the retainer 11 with an opening 11b so as not to rotate relatively to each other, whereby the connector 14 is rotatably supported by the retainer 11.
The third rotary engaging portion 14c has meshing grooves such as spline grooves or the like, extending in the axial direction thereof and formed at a predetermined pitch along the circumference direction thereof.

The high reduction ratio reducing mechanism 7a includes a circular carrier gear 17, a predetermined number of planetary gears 18 rotatably mounted on the carrier gear 17 (three planetary gears in the drawings), a ring-shaped ring member 19, and a sun gear member 20.
The carrier gear 17 has a predetermined number of meshing grooves such as spline grooves or the like on the inner face 17a for meshing with the connector 14, extending in the axial direction thereof and formed at a predetermined pitch. The predetermined number of meshing grooves formed on the inner face 17a mesh with the protrusions formed between the meshing grooves formed on the third rotary engaging portion 14c of the connector 14, as well as the protrusions formed between the meshing grooves formed on the inner face 17a meshing with the meshing grooves formed on the third rotary engaging portion 14c (meshing in the same way as with "spline meshing"), thereby engaging the carrier gear 17 and the connector 14 so as not to rotate relatively to each other, i.e., so as to enable rotation integrally. Furthermore, outer teeth 17b are formed on the outer face of the carrier gear 17.

The planetary gears 18 are rotatably mounted on the carrier gear 17 with reduction pins 22 through a reduction plate 21.
The ring member 19 includes an internal gear 19a formed on the inner face thereof, and a ratchet wheel 19b formed on the outer face thereof, having a configuration wherein the internal gear 19a and the ratchet wheel 19b are integrally rotated.

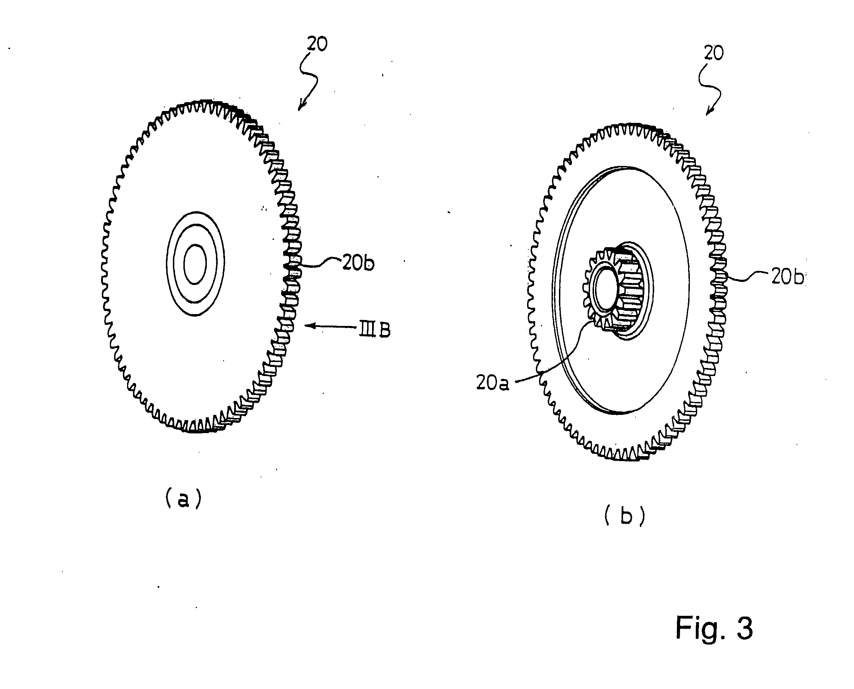

As shown in Fig. 3(a) and Fig. 3(b), the sun gear member 20 comprises a sun gear 20a formed of small-sized outer teeth, and large-sized outer teeth 20b, and has a configuration wherein the sun gear 20a and the outer teeth 20b rotate integrally.
Each planetary gear 18 supported by the carrier gear 17 meshes with the sun gear 20a and the internal gear 19a at all times, whereby a planetary gear mechanism is completed. Thus, the reducing mechanism 7 serves as a planetary gear reducing mechanism with the sun gear 20a as the input end, and with the carrier gear 17 as the output end.

As shown in Fig. 1, the power transmission mechanism 8 further includes a connecting gear 23, a pair of clutch springs 24, a pair of pulleys 25, a lower connecting gear 26 having outer teeth, an upper connecting gear 27 having outer teeth, a guide plate 28, and an idling gear 29 having outer teeth.
The connecting gear 23 is rotatably supported by a rotating shaft 11c formed on the retainer 11, includes a first connecting gear 23a formed of a large-diameter outer teeth and a small-diameter second connecting gear 23b, and has a configuration wherein the first and second connecting gears 23a and 23b are rotated integrally. In this case, the large-diameter first connecting gear 23a meshes with the motor gear 13 at all times as shown in Fig. 2.

As shown in Fig. 1, rotating shafts 26a erect on both side faces of the lower connecting gear 26 (Fig. 1 shows only one rotating shaft 26a), and have a through hole 26b which passes through the rotating shafts 26a in the axial direction. Each rotating shaft 26a has a flat portion for fitting to a slot 25a of each pulley 25 therealong. Thus, both the pulleys 25 are rotatably supported by both side faces of the lower connecting gear 26 so as to enable rotation integrally along with the lower connecting gear 26. Each of the pulleys 25 engage with the clutch spring 24 with a first curved engaging portion 24a. Furthermore, the upper connecting gear 27 is supported by one of the rotating shafts 26a of the lower connecting gear 26 so as to enable rotation integrally along with the lower connecting gear 26.
Furthermore, the pulleys 25, the lower connecting gear 26, and the upper connecting gear 27, are rotatably supported by a rotating shaft 11d erected on the retainer 11.

The guide plate 28 is supported by a pair of supporting shafts 11e erected on the retainer 11 by fitting the pair of supporting shafts 11e to a pair of openings 28a formed on the guide plate 28, and a pair of screws 30 are screwed to a pair of screw holes 11f formed on the retainer 11, whereby the guide plate 28 is mounted to the retainer 11. Furthermore, the idling gear 29 is rotatably supported by a rotating shaft 28c erected on the guide plate 28. As shown in Fig. 2, the idling gear 29 meshes with the outer teeth 20b of the sun gear member 20, the small-sized second connecting gear 23b of the connecting gear 23, and the upper connecting gear 27, at all times.

On the other hand, the low reduction ratio reducing mechanism 7b comprises the upper connecting gear 27, the lower connecting gear 26, a clutch gear 31, and the carrier gear 17.
Accordingly, the rotational torque of the motor 6 transmitted to the idling gear 29 is transmitted to the spool 4 through the low reduction ratio reducing mechanism 7b or the high reduction ratio reducing mechanism 7a.

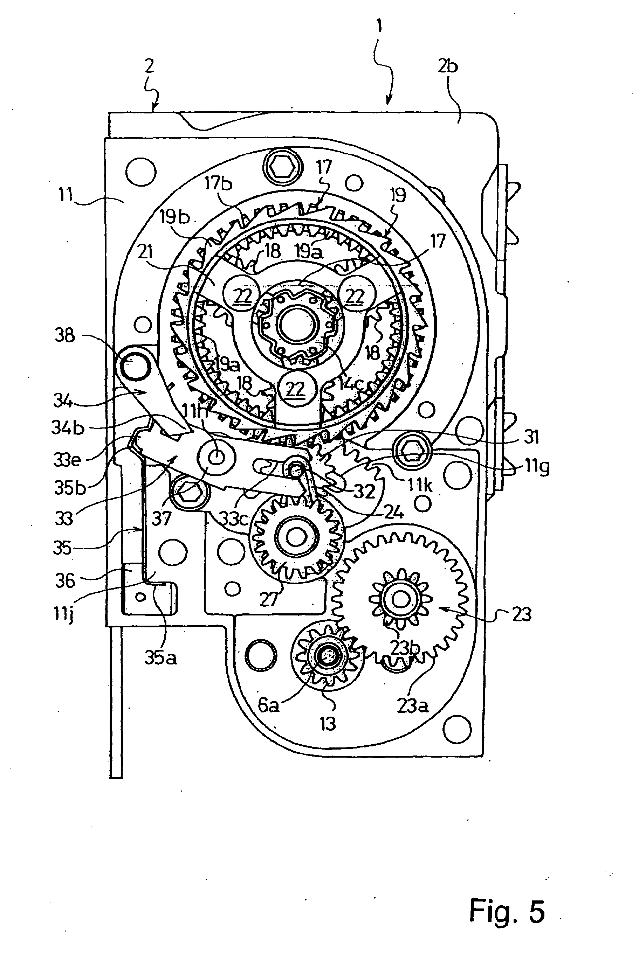

As shown in Fig. 1, the power transmission mode switching mechanism 9 comprises the clutch gear 31 having outer teeth, a rotating shaft 32, a clutch arm 33, a clutch pawl 34, a resistance spring 35, and a spring stopper 36.
As shown in Fig. 5, the clutch gear 31 is formed so as to mesh with outer teeth 17b of the carrier gear 17 with a greater diameter than with the clutch gear 31, as well as meshing an unshown lower connecting gear 26 (corresponding to the motor gear according to the present invention) at all times. A rotating shaft 32 passes through a center opening 31a so as to rotatably support the clutch gear 31.

The clutch arm 33 is formed of a pair of side walls 33a and 33b, and a bottom wall (not shown), with a cross-sectional shape of a "U". One of the ends of both the side walls 33a and 33b protrude so as to form a straight supporting groove 33c. The clutch gear 31 is disposed between protrusions of both the side walls 33a and 33b, and the rotating shaft 32 protruding from both side faces of the clutch gear 31 is supported by the supporting groove 33c so as to allow movement thereof along the supporting groove 33c. Furthermore, the pair of clutch springs 24 are engaged with the protrusions protruding from both the side walls 33a and 33b of the rotating shaft 32 with second curved engaging portions 24b thereof. Furthermore, the rotating shaft 32 is supported by the retainer 11 by fitting one end of the rotating shaft 32 to a guide opening 11g formed on the retainer 11. The guide opening 11g is formed in the shape of an arc with the rotating shaft 11d as the center. Thus, the rotating shaft 32 is guided by the guide opening 11g so as to move along the arc formed with the rotating shaft 11d as the center.

On the other hand, each of the other ends of the both the side walls 33a and 33b include a slot 33d, as well as an engaging portion 33e generally in the shape of an arc. Furthermore, each of the middle portions of both the side walls 33a and 33b along the longitudinal direction include a supporting opening 33f. The clutch arm 33 is rotatably supported by the retainer 11 by fitting a supporting shaft 11h erected on the retainer 11 to the supporting openings 33f formed on the side walls 33a and 33b, and is fixed so as to not to come off, by fixing an E ring 37 to the supporting shaft 11h.

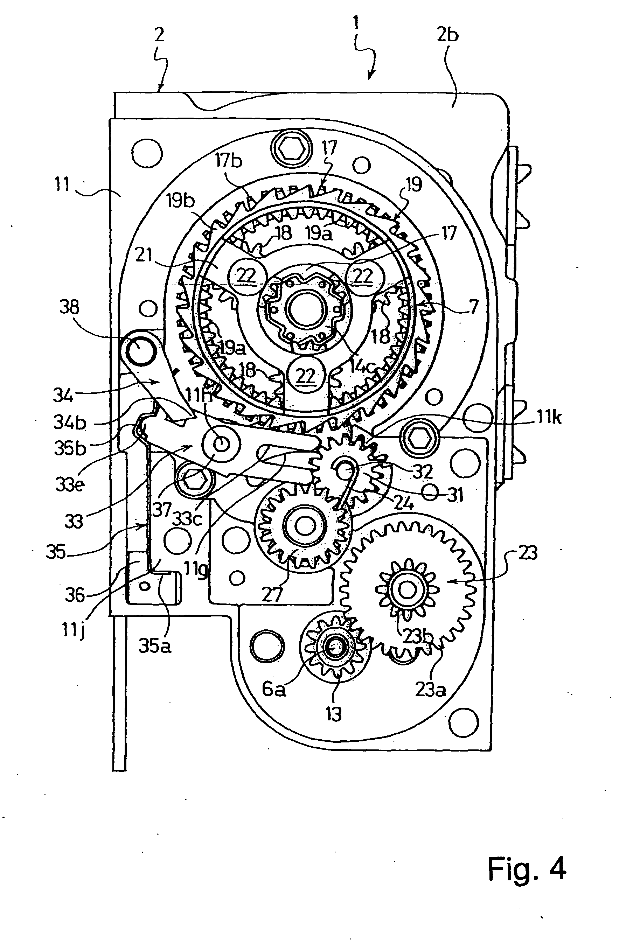

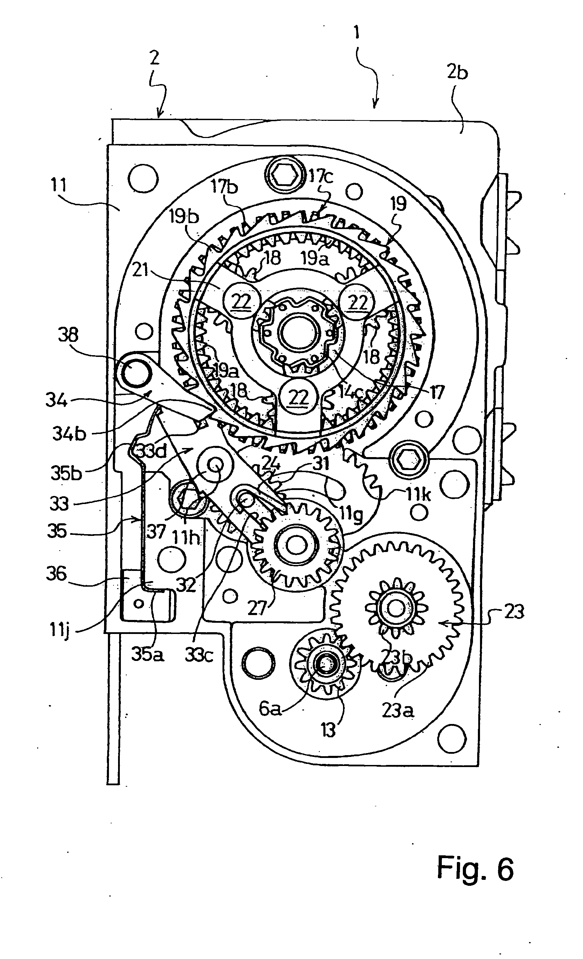

The clutch pawl 34 includes a supporting opening 34a on one end thereof, and is formed such that the other end serves as an engaging pawl 34b. Furthermore, the other end of the clutch pawl 34, i.e., the engaging pawl 34b, includes an engaging pin 34c erected thereon. The engaging pin 34c is fit to the slots 33d of the clutch arm 33 so as to allow movement relatively to the clutch arm along the slots 33d. As shown in Fig. 4, a pawl pin 38 passes through the supporting opening 34a, and is inserted into and engaged with a pin hole 11i formed on the retainer 11, whereby the clutch pawl 34 is turnably mounted to the retainer 11. As shown in Fig. 6, the engaging pawl 34b can engage with a ratchet wheel 19b so as to prohibit rotation of the ring member 19 in the clockwise direction (corresponding to the belt-extracting direction α of the spool 4), whereby at the time that the engaging pawl 34b engages with the ratchet wheel 19b, rotation of the ring member 19 in the clockwise direction is prohibited.

The resistance spring 35 is formed of a belt-shaped plate spring with the lower end formed in the shape of an "L" serving as a supporting portion 35a, and with the middle-upper portion along the longitudinal direction formed in the shape of a "U" serving as a recess 35b. Furthermore, the portion between the recess 35b and the supporting portion 35a is formed flat, and the portion between the recess 35b and the upper end is formed in a curve. The recess 35b is formed so as to engage with the engaging portion 33e of the clutch arm 33. At the time that the engaging portion 33e engages with the recess 35b as shown in Fig. 4, the extending direction of the supporting groove 33c matches the tangential direction of the guide opening 11g in the shape of an arc, thereby enabling movement of the rotating shaft 32 in either direction from the guide opening 11g to the supporting groove 33c or from the supporting groove 33c to the guide opening 11g.

The clutch mechanism according to the present invention comprises the clutch springs 24, the pulleys 25, the lower connecting gear 26, the upper connecting gear 27, the idling gear 29, the clutch gear 31, the rotating shaft 32, the clutch arm 33, the clutch pawl 34, and the resistance spring 35.
The spring stopper 36 is formed in the shape of an "L", and the supporting portion 35a is held between the spring stopper 36 and a spring mounting portion 11j formed on the retainer 11, so that the resistance spring 35 is mounted on the retainer 11 with the upper end as a free end, and with the lower end as a fixed end.

Furthermore, as shown in Fig. 1, Fig. 4, and Fig. 6, the retainer 11 includes a clutch gear stopping/holding portion 11k formed of inner teeth (which corresponds to noise preventing means and clutch gear stopping and holding means). At the time of the power transmission disengaged mode as shown in Fig. 4, wherein the rotating shaft 32 comes in contact with the right end of the guide opening 11g so that the clutch gear 31 is positioned at the most-right position, the clutch gear 31 meshes with the inner teeth of the clutch gear stopping/holding portion 11k so as to stop rotation of the clutch gear 31 in the counterclockwise direction, and maintain the stopped state.

The components forming the above-described reducing mechanism 7, power transmission gear mechanism 8, and power transmission mode switching mechanism 9, are mounted within recesses formed on the face of the retainer 11 which is opposite to the face for mounting the frame 2, following which a retainer cover 39 is mounted with a predetermined number (four in the drawings) of screws 40, whereby the aforementioned components are covered with the retainer cover 39.

The power transmission gear mechanism 8 thus formed enters one of three power transmission modes described below.

### (1) Power transmission disengaged mode

As shown in Fig. 4, in the power transmission disengaged mode, the engaging portion 33e of the clutch arm 33 forming the power transmission mode switching mechanism 9 is engaged with the recess 35b of the resistance spring 35. In the aforementioned state wherein the engaging portion 33e engages with the recess 35b, the engaging pawl 34b of the clutch pawl 34 does not mesh with the ratchet wheel 19b of the ring member 19 so as to allow rotation of the ring member 19. Accordingly, the torque transmission path (which is a low speed and high torque transmission path described later) between the sun gear member 20 and the carrier gear 17 is disengaged.

On the other hand, the rotating shaft 32 comes in contact with the right end of the guide opening 11g so as to position the clutch gear 31 at the most-right position serving as a power off position (clutch off position). The clutch gear 31 positioned at the power off position meshes with the inner teeth of the clutch gear stopping/holding portion 11k, as well as separating from the outer teeth 17b of the carrier gear 17, thereby keeping rotation thereof in the counterclockwise direction stopped. These actions disengage the torque transmission path between the clutch gear 31 and the carrier gear 17 (which is a high-speed and low-torque transmission path).
Accordingly, in the power transmission disengaged mode, the spool 4 and the motor 6 are not engaged so that the rotational torque of the motor 6 is not transmitted to the spool 4, and the rotational torque of the spool 4 is not transmitted to the motor 6.

### (2) Low reduction ratio power transmission mode

As shown in Fig. 5, in the low reduction ratio power transmission mode, the engaging portion 33e of the clutch arm 33 engages with the recess 35b of the resistance spring 35 in the same way as in the power transmission disengaged mode. In the aforementioned state wherein the engaging portion 33e engages with the recess 35b, the engaging pawl 34b of the clutch pawl 34 does not mesh with the ratchet wheel 19b of the ring member 19 so as to allow rotation of the ring member 19. Accordingly, the low speed and high torque transmission path between the sun gear member 20 and the carrier gear 17 is disengaged.

On the other hand, the rotating shaft 32 is positioned at the uppermost position (the closest position to the rotating shaft of the spool 4) at the middle portion of the guide opening 11g so as to position the clutch gear 31 at the uppermost position (the closest position to the rotating shaft of the spool 4). The clutch gear 31 at the uppermost position meshes with the outer teeth 17b of the carrier gear 17. Accordingly, the clutch gear 31 is positioned at the clutch-engaged position wherein the high-speed and low-torque transmission path between the clutch gear 31 and the carrier gear 17 is engaged. That is to say, the motor 6 is engaged with the spool 4 through the motor gear 13, the connecting gear 23, the idling gear 29, the upper connecting gear 27, the lower connecting gear 26, the clutch gear 31, the carrier gear 17, and the connector 14. That is to say, the low reduction ratio power transmission path is selected. Furthermore, the rotating shaft 32 at the uppermost position is inserted into the supporting groove 33c of the clutch arm 33 so as to come in contact with the clutch arm 33.
As described above, in the low reduction ratio power transmission mode, the high-speed and low-torque transmission path is selected. In the low reduction ratio power transmission mode, rapid retracting of the seat belt can be performed by driving of the motor 6.

### (3) High reduction ratio power transmission mode

As shown in Fig. 6, in the high reduction ratio power transmission mode, the engaging portion 33e of the clutch arm 33 separates from the recess 35b of the resistance spring 35 so as to be positioned at the curve portion of the resistance spring 35, formed at an upper position as to the recess 35b. In the aforementioned state wherein the engaging portion 33e separates from the recess 35b, the engaging pawl 34b of the clutch pawl 34 engages with the ratchet wheel 19b of the ring member 19 so as to prohibit rotation of the ring member 19 in the clockwise direction. That is to say, the low speed and high torque transmission path between the sun gear member 20 and the carrier gear 17 is engaged. That is to say, the motor 6 is engaged with the spool 4 through the motor gear 13, the connecting gear 23, the idling gear 29, the outer teeth 20b of the sun gear member 20, the sun gear 20a, the planetary gears 18, the carrier gear 17, and the connector 14. Accordingly, the high reduction ratio power transmission path by the planetary gear mechanism is selected.

On the other had, the rotating shaft 32 comes in contact with the left end of the guide opening 11g so as to position the clutch gear 31 at the most left position. The clutch gear 31 at the most left position separates from the outer teeth 17b of the carrier gear 17. Accordingly, the high speed and low torque transmission path between the clutch gear 31 and the carrier gear 17 is disengaged.
In the high reduction ratio power transmission mode, the low speed and high torque transmission path is selected. In the high reduction ratio power transmission mode, the seat belt is retracted with a high tension by driving of the motor 6.

As described above, the clutch gear 31 can be moved between the clutch-engaged position for engaging the power transmission path and the clutch-disengaged position for disengaging the power transmission path. The power transmission mode switching between the power transmission disengaged mode, the low reduction ratio power transmission mode, and the high reduction ratio power transmission mode, is performed by the power transmission mode switching mechanism 9.

### (1) Switching of the power transmission mode from the power transmission disengaged mode to the low reduction ratio power transmission mode

Upon positive rotation of the motor 6 (rotation of the motor rotating shaft 6a in the clockwise direction in Fig. 4, which corresponds to rotation of the spool 4 in the belt-retracting direction β), the lower clutch gear 26 and the pulleys 25 are rotated in the direction corresponding to the belt-retracting direction β for the spool 4 through the motor gear 13, the connecting gear 23, the idling gear 29, and the upper clutch gear 27. In this case, while the clutch gear 31 rotates in the direction corresponding to the belt-retracting direction β, i.e., in the clockwise direction in Fig. 4, the clutch gear 31 meshes with the inner teeth of the clutch gear stopping/holding portion 11k, and the rotating shaft 32 is free from any resistance, and accordingly, the clutch springs 24 turn in the same direction as with the pulleys 25. Accordingly, the clutch gear 31 and the rotating shaft 32 move in the left direction along the guide opening 11g. Upon movement of the clutch gear 31 and the rotating shaft 32 on the left side by a predetermined distance, the clutch gear 31 separates from the inner teeth of the clutch gear stopping/holding portion 11k so as to enable rotation without any load, following which the rotating shaft 32 comes in contact with the clutch arm 33 as shown in Fig. 5.

In the state wherein the rotating shaft 32 comes in contact with the clutch arm 33, the clutch gear 31 and the rotating shaft 32 are positioned at the aforementioned uppermost positions as shown in Fig. 5, and the clutch gear 31 meshes with the outer teeth 17b of the carrier gear 17. Accordingly, rotation of the clutch gear 31 is transmitted to the carrier gear 17, whereby the carrier gear 17 is rotated. In this case, in the event that the seat belt 3 is slack, the seat belt 3 is reeled onto the spool 4 by rotation of the carrier gear 17. In the event that the seat belt is tautened, the spool 4 does not rotate, and accordingly, the carrier gear 17 does not rotate. Accordingly, the clutch gear 31 does not rotate due to resistance applied from the carrier gear 17.

On the other hand, the lower connecting gear 26 is forced to rotate due to rotational torque of the motor 6, and accordingly, force is applied to the rotating shaft 32 so as to move in the aforementioned the most left position due to rotational torque of the lower connecting gear 26. In this case, the rotating shaft 32 comes in contact with the clutch arm 33, and accordingly, the clutch arm 33 is pressed by the rotating shaft 32. However, at this time, the seat belt 3 is tightened with a predetermined tension or less, and accordingly, the momentum for rotating the clutch arm 33 in the clockwise direction due to pressing force applied from the rotating shaft 32 is smaller than the momentum for preventing rotation of the clutch arm 33 in the clockwise direction due to engaging between the engaging portion 33e and the recess 35b. Accordingly, the engaging portion 33e does not separate from the recess 35b, the clutch arm 33 is not turned, and the rotating shaft 32 is stopped at the position where the rotating shaft 32 comes in contact with the clutch arm 33.

As described above, the rotating shaft 32 is stopped, and accordingly, the clutch gear 31 and the rotating shaft 32 are held at the aforementioned uppermost positions as shown in Fig. 5. As described above, the clutch gear 31 is held at the uppermost position, thereby maintaining meshing of the clutch gear 31 with the outer teeth 17b of the carrier gear 17, and thereby maintaining engaging of the high speed and low torque transmission path between the clutch gear 31 and the carrier gear 17. Furthermore, the clutch arm 33 is not turned, and accordingly, the clutch pawl 34 is not turned, thereby keeping the engaging pawl 34b at a position where the engaging pawl 34b does not engage with the ratchet wheel 19b. This allows the ring member 19 to rotate freely, as well as maintaining disengaging of the low speed and high torque transmission path between the sun gear member 20 and the carrier gear 17.
Thus, switching of the power transmission mode of the power transmission mechanism 8 from the power transmission disengaged mode to the low reduction ratio power transmission mode is performed, whereby the power transmission mechanism 8 enters the low reduction ratio power transmission mode.

### (2) Switching of the power transmission mode from the low reduction ratio power transmission mode to the high reduction ratio power transmission mode

The high reduction ratio power transmission mode is set by relatively high rotational torque of the motor 6. In this case, the power transmission mode is set from the power transmission disengaged mode to the high reduction ratio power transmission mode through the low reduction ratio power transmission mode.
Switching of the power transmission mode from the power transmission disengaged mode to the low reduction ratio power transmission mode is performed in the same way as described above. However, at the time of setting the power transmission mode to the high reduction ratio power transmission mode, the tension of the seat belt 3 is greater than a predetermined value, and accordingly, the momentum applied to the clutch arm 33 due to the pressing force from the rotating shaft 32 is greater than the momentum for preventing rotation of the clutch arm 33 in the clockwise direction due to engaging of the engaging portion 33e with the recess 35b. Accordingly, the engaging portion 33e separates from the recess 35b.

Accordingly, upon the clutch springs 24 further turning in the counterclockwise direction, the rotating shaft 32 moves in the left direction along the guide opening 11g while turning the clutch arm 33 in the clockwise direction with the supporting shaft 11h as the center. Accordingly, the clutch gear 31 is further moves in the left direction, as well. Upon the rotating shaft 32 coming in contact with the left end of the guide opening 11g, further movement thereof is prohibited, and the clutch gear 31, the rotating shaft 32, and the clutch springs 24, are stopped. Accordingly, as shown in Fig. 6, the clutch gear 31 and the rotating shaft 32 are positioned at the aforementioned most left positions. The clutch gear 31 at the most left position separates from the outer teeth 17b of the carrier gear 17, and accordingly, the high speed and low torque transmission path between the clutch gear 31 and the carrier gear 17 is disengaged.

On the other hand, the clutch pawl 34 turns in the counter clockwise direction with the clutch pawl pin 38 as the center corresponding to turning of the clutch arm 33, and is positioned at a position where the engaging pawl 34b thereof can engage with the ratchet wheel 19b as shown in Fig. 6. In this case, the sun gear member 20 is rotated by rotational torque of the motor 6 so as to rotate the ring member 19 in the clockwise direction, and accordingly, the ratchet wheel 19b engages with the engaging pawl 34b. This action stops rotation of the ring member 19, and engages the low speed and high torque transmission path between the sun gear member 20 and the carrier gear 17.
Thus, switching of the power transmission mode of the power transmission mechanism 8 is performed from the low reduction ratio power transmission mode to the high reduction ratio power transmission mode, whereby the power transmission mechanism 8 enters the high reduction ratio power transmission mode.

### (3) Switching of the power transmission mode from the high reduction ratio power transmission mode to the power transmission disengaged mode through the low reduction power transmission mode

Upon the motor 6 rotating in the reverse direction (upon the motor rotating shaft 6a rotating in the counterclockwise direction, which corresponds to rotation of the spool 4 in the belt-extracting direction α) in the high reduction ratio power transmission mode as shown in Fig. 6, the lower connecting gear 26 and the pulleys 25 rotate in the direction reverse to the aforementioned rotational direction, as well. In this case, the clutch springs 24 turn in the direction reverse to the aforementioned rotational direction, as well, and accordingly, the clutch gear 31 and the rotating shaft 32 move in the right direction along the guide opening 11g while turning the clutch arm 33 in the counterclockwise direction.

At the same time, the clutch pawl 34 turns in the clockwise direction corresponding to turning of the clutch arm 33 in the counterclockwise direction, and accordingly, the clutch pawl 34 is positioned at a disengaged position where the clutch pawl 34 does not engaged with the ratchet wheel 19b. This action allows the ring member 19 to rotate freely, and disengages the low speed and high torque transmission path.

While at the time of the clutch gear 31 and the rotating shaft 32 reaching the aforementioned uppermost positions, the clutch gear 31 meshes with the outer teeth 17b of the carrier gear 17, and accordingly, the power transmission mechanism 8 temporarily enters the low reduction ratio power transmission mode shown in Fig. 5, the clutch gear 31 immediately separates from the outer teeth 17b due to continuous movement of the clutch gear 31 and the rotating shaft 32 in the right direction, leading to free rotation of the clutch gear 31. This actions temporarily engage the high speed and low torque transmission path, immediately following which the high speed and low torque transmission path is disengaged. Note that at the time of temporary engaging of the high speed and low torque transmission path, the motor 6 rotates in the reverse direction, and accordingly, the spool 4 temporarily rotates in the belt-extracting direction α, immediately following which the spool 4 stops.

Furthermore, the rotating shaft 32 moves from the uppermost position in the right direction, leading to separation thereof from the clutch arm 33. Furthermore, the clutch gear 31 and the rotating shaft 32 further move in the right direction due to further turning of the clutch springs 24 in the reverse direction, and accordingly, the clutch gear 31 meshes with the inner teeth of the clutch gear stopping/holding portion 11k. Upon the rotating shaft 32 coming in contact with the right end of the guide opening 11g, further movement thereof is prohibited, and accordingly, movement of the clutch gear 31 and the rotating shaft 32 in the right direction, and the rotation of the clutch springs 24 in the reverse direction, are stopped. Accordingly, the clutch gear 31 and the rotating shaft 32 are positioned at power transmission disengaging positions which are the most right positions shown in Fig. 4 described above. In this case, the clutch gear 31 meshes with the inner teeth of the clutch gear stopping/holding portion 11k, leading to stop of rotation thereof.

Thus, switching of the power transmission mode of the power transmission mechanism 8 is performed from the high reduction ratio power transmission mode to the power transmission disengaged mode, whereby the power transmission mechanism 8 enters the power transmission disengaged mode. Note that at the time that the power transmission mechanism 8 enters the power transmission disengaged mode, the motor 6 may continue driving or may stop driving.

Furthermore, the seat belt retractor 1 according to the present embodiment has belt modes for the seat belt 3 described below. That is to say, the belt modes include: a belt storage mode wherein the seat belt 3 is not worn by the passenger, and is completely reeled onto the spool 4, a belt extracting mode wherein the seat belt 3 is extracted from the spool 4 so as to be worn by the passenger, fitting belt retracting mode wherein the seat belt 3 is fit to the passenger in a situation where the passenger wear the seat belt 3, a normal wearing mode (comfortable mode) wherein the passenger wears the seat belt 3 in normal situations without any sensation of pressure, a warning mode wherein in the event that the system detects dozing off of the driver or an obstacle in front of the vehicle in the direction of movement, retraction of the seat belt 3 is repeated predetermined times for warning the driver, an emergency mode wherein in the event that the vehicle extremely likely have a collision with an obstacle or the like while moving, the seat belt 3 is retracted so as to restrain the passenger with an extremely strong belt tension, and a storing belt retracting mode wherein the seat belt 3 is retracted so as to be completely reeled onto the spool 4 when the passenger does not wear the seat belt 3.

With the seat belt retractor 1 having such a configuration, the power transmission mechanism 8 includes two power transmission paths of the high speed and low torque power transmission path serving as the low reduction ratio power transmission mode, and the low speed and high torque power transmission path serving as the high reduction ratio power transmission mode, and accordingly, the seat belt retractor 1 has two functions of rapid belt retraction for tautening the seat belt 3 in the low reduction ratio power transmission mode, and high-torque belt retraction for restraining the passenger in the high reduction ratio power transmission mode.

Furthermore, the seat belt retractor 1 according to the present embodiment selects a power transmission path from the aforementioned two power transmission paths so as to efficiently transmit rotational torque of the motor 6 to the spool 4, thereby effecting two types of seat-belt retraction in a sure manner with small power consumption. In particular, with the seat belt retractor 1 according to the present embodiment, high-torque seat-belt retraction is performed for restraining the passenger through the low speed and high torque power transmission path, and accordingly, the motor 6 is driven with small rotational torque as compared with the conventional one. Thus, a small-sized motor is employed as the motor 6, as well as driving the motor with reduced power consumption, thereby reducing the size of the seat belt retractor 1.

Furthermore, with the seat belt retractor 1 according to the present embodiment, the power transmission mechanism 8 enters a power transmission mode selected from the low reduction ratio power transmission mode and the high reduction ratio power transmission mode, corresponding to the tension of the seat belt 3, thereby easily performing mode switching without controlling rotational torque of the motor 6.
Furthermore, with the seat belt retractor 1 according to the present embodiment, the power transmission mechanism 8 has the power transmission disengaged mode wherein rotational torque of the motor 6 is not transmitted to the spool 4, and thus, extraction of the seat belt 3, normal wearing of the seat belt 3 without any sensation of pressure, and storage of the seat belt 3 when the passenger does not wear the seat belt 3, are performed unaffected by the motor 6.

Furthermore, the high reduction ratio reducing mechanism 7a is formed of a planetary gear mechanism, thereby reducing the size of the low speed and high torque transmission path. This effectively reduces the size of the seat belt retractor 1 including both the low reduction ratio power transmission mode and the high reduction ratio power transmission mode.

Furthermore, the carrier of the high reduction ratio reducing mechanism 7a and the outer teeth 17b of the low reduction ratio reducing mechanism 7b are formed of a single carrier gear 17, thereby reducing the size of the seat belt retractor 1, as well as reducing the number of the components thereof.
Furthermore, with the seat belt retractor 1 according to the present embodiment, the power transmission mode switching mechanism 9 controls rotation of the internal gear 19a of the planetary gear mechanism, and controls meshing of the small-diameter clutch gear 31 with the outer teeth 17b of the large-diameter carrier gear 17, corresponding to a tension of the seat belt 3, thereby easily switching the power transmission mode.

Furthermore, with the seat belt retractor 1 according to the present embodiment, at the time that the clutch gear 31 is positioned at the power transmission disengaging position, the clutch gear 31 engages with the inner teeth of the clutch gear stopping/holding portion 11k, accordingly rotation of the clutch gear 31 is stopped, thereby preventing noise due to rotation of the clutch gear 31, and rotation of other gears of the clutch mechanism and of the power transmission mechanism 8 corresponding to rotation of the clutch gear 31, in a sure manner. Furthermore, the clutch gear stopping/holding means are formed of the inner teeth for meshing with the clutch gear 31, thereby enabling stopping of rotation of the clutch gear 31 in a sure manner at the time of disengaging of the clutch mechanism, thereby effectively preventing noise with a simple configuration.

Note that the clutch mechanism noise preventing means according to the present invention are not restricted to the clutch gear stopping/holding portion 11k, rather, any noise prevention means may be employed as long as noise from the clutch mechanism and the power transmission mechanism is prevented when the clutch mechanism is disengaged.

On the other hand, the power transmission mode switching means according to the present invention are not restricted to the above-described power transmission mode switching mechanism 9, rather, a solenoid mechanism using two types of torque of high torque and low torque of the motor 6 may be employed as the power transmission mode switching means.
Furthermore, the high reduction ratio reducing mechanism 7a according to the present invention is not restricted to a configuration wherein the carrier of the high reduction ratio reducing mechanism 7a and the outer teeth 17b of the low reduction ratio reducing mechanism 7b are formed of the single carrier gear 17; the high reduction ratio mechanism 7a may have a configuration wherein the carrier of the high reduction ratio reducing mechanism 7a and the outer teeth 17b of the low reduction ratio reducing mechanism 7b are formed of separate components.

Furthermore, while description has been made regarding an arrangement wherein rotational torque of the motor 6 is kept constant during switching of the power transmission mode, an arrangement may be made wherein rotational torque of the motor 6 is controlled corresponding to the belt modes such as the fitting belt retracting mode, the warning mode, the emergency mode, the belt storage mode, and the like.

### [Industrial Applicability]

The seat belt retractor according to the present invention is suitable employed in a vehicle such as an automobile or the like for retracting a seat belt for restraining and protecting the passenger by actions of a motor.

## Claims

1. A seat belt retractor (1), comprising
a spool (4) for reeling a seat belt (3);
a motor (6) for generating rotational torque for rotating said spool (4); and
a clutch mechanism (24-36) wherein a power transmission path for transmitting rotational torque of said motor (6) to said spool (4) is engaged when in the engaged mode, and on the other hand, said power transmission path is disengaged when in the disengaged mode,
wherein said seat belt retractor (1) includes noise preventing means (11k) for preventing noise when the clutch mechanism (24-36) enters the disengaged mode.

2. A seat belt retractor (1) according to Claim 1, wherein said clutch mechanism (24-36) can move between the clutch-engaged position for engaging said power transmission path and the clutch-disengaged position for disengaging said power transmission path, and includes a clutch gear (31) for always meshing with a gear (17) connected to said motor (6),
and wherein said noise preventing means (11k) prevent noise when said clutch gear (31) is positioned at said clutch-disengaged position.

3. A seat belt retractor (1) according to Claim 2, wherein said noise preventing means (11k) serves as clutch gear stopping/holding means for stopping rotation of said clutch gear (31) when said clutch gear (31) is positioned at said clutch-disengaged position.

4. A seat belt retractor according to Claim 3, wherein said clutch gear stopping/holding means is formed of teeth (11k) for meshing with said clutch gear (31).

5. A seat belt apparatus, comprising
a seat belt (3); and
a seat belt retractor (1) according to any one of Claims 1-4 for retracting the seat belt (3).
